# EUROPEAN PATENT APPLICATION

(11) **EP 4 707 354 A1**
(43) Date of publication of application: **11.03.2026**
(21) Application number: 25768542.0
(22) Date of filing: 27.02.2025
(51) Int. Cl.: C09J 7/30, C09J 7/20, C09J 9/00, H01M 50/526

(54) **FLEXIBLE HEAT-RESISTANT TAPE AND BUSBAR COMPRISING SAME**

(30) Priority: 06.03.2024 KR 20240031826
(71) Applicant: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2025/002724
(87) International publication number: WO 2025/188018

(57) **Abstract**

Disclosed is a heat resistant tape including a flexible tape base material, an adhesive layer added to an outer surface of one side of the tape base material, and a heat resistant layer located on a surface of the adhesive layer, wherein the heat resistant tape is reliably attached and secured by the adhesive layer exposed as the tape base material is stretched.

## Description

### [Technical Field]

This application claims the benefit of priority to Korean Patent Application No. 10-2024-0031826 filed on March 6, 2024, the disclosure of which is incorporated herein by reference in its entirety.

The present invention relates to a flexible heat resistant tape and a busbar including the same. More particularly, the present invention relates to a flexible heat resistant tape configured such that a highly heat resistant material that is easily deformable is coupled to a flexible tape and a busbar including the same.

### [Background Art]

There is growing demand for secondary batteries capable of solving the problem of air pollution caused by the use of fossil fuels and storing electrical energy produced from alternative energy sources. For example, a lithium secondary battery, which has high energy density per weight, is used as an energy source not only for mobile devices, such as mobile phones, tablet computers, Bluetooth earphones, and electronic cigarettes, but also for medium- and large-sized devices, such as electric bicycles, electric kickboards, and electric vehicles.

As the types of devices that use lithium secondary batteries as an energy source expands, application of lithium secondary batteries is also expanding to devices that require high capacity and high output.

In line with this trend, a battery module in which a plurality of battery cells is electrically connected to each other and a battery pack in which a plurality of battery modules is connected to each other in series and/or in parallel are being increasingly manufactured and used.

Meanwhile, when flames or sparks occur due to ignition in a battery pack, the sheathing of a busbar that electrically interconnects battery modules in the battery pack may be melted, whereby the busbar may come into contact with a conductive member located adjacent thereto. Such short circuit may cause the flames to spread further, seriously jeopardizing user safety.

Therefore, various technologies have been researched to ensure insulation, heat resistance, and fire resistance of an electrical connection member such as a busbar.

Patent Document 1 relates to a flexible busbar including a conductor unit in which a plurality of plate-shaped conductors is stacked, a terminal unit formed on each of both ends of the conductor unit in a longitudinal direction by welding, and a refractory tape wound on the conductor unit so as to have at least two overlapping layers in a predetermined section of the conductor unit, wherein the refractory tape is configured such that a mica layer is bonded to an upper surface of a glass yarn fabric layer via an adhesive.

In the refractory tape of Patent Document 1, the mica layer is attached to the glass yarn fabric layer using the adhesive, and the refractory tape is added to the outer surface of the conductor unit of the busbar, wherein a separate member is further required to fix the refractory tape to the outer surface of the conductor unit of the busbar.

A flexible mica tape of Patent Document 2 includes a flexible glass fiber backing and a mica matrix structure bonded to the flexible glass fiber backing, wherein the mica matrix structure includes a nanoclay platelet in which metal ions selected from the group consisting of Cr, Sn, Zn, and a mixture thereof are intercalated and an insulating resin, and the mica matrix structure including the nanoclay platelet, the insulating resin, and the metal ions is disposed adjacent to the flexible glass fiber backing.

In the flexible electrically insulating mica tape of Patent Document 2, the mica matrix including the mica, the metal ions, and the insulating resin is disposed on one side of the flexible glass fiber backing, but the flexible electrically insulating mica tape does not include an adhesive layer exposed on an outer surface thereof, and therefore a separate member is required for attachment to another object.

Therefore, there is a need for a tape that can be attached to a target including not only a simple shaped outer surface but also a complex shaped outer surface, does not require a separate member for adhesion and fixation, and has high insulation and heat resistance.

### (Prior Art Documents)

(Patent Document 1) Korean Patent Application Publication No. 10-2016-0049260 (2016.05.09)
(Patent Document 2) Korean Patent Application Publication No. 10-2002-0075414 (2002.10.04)

### [Disclosure]

### [Technical Problem]

The present invention has been made in view of the above problems, and it is an object of the present invention to provide a flexible heat resistant tape including a flexible tape base material and an adhesive layer, wherein the adhesive layer is exposed at least when attached such that the flexible heat resistant tape can be reliably attached and fixed to a target, and the shape of the flexible heat resistant tape is maintained even in the event of fire or exposure to flames, and a busbar including the same.

### [Technical Solution]

A heat resistant tape according to the present invention to accomplish the above object includes a flexible tape base material, an adhesive layer added to an outer surface of one side of the tape base material, and a heat resistant layer located on a surface of the adhesive layer.

The tape base material may include refractory silicone.

The heat resistant layer may include mica.

The heat resistant layer may include mica pieces continuously arranged.

When the tape base material is stretched, the mica pieces may be configured to be spaced apart from each other and the adhesive layer may be exposed between the mica pieces.

The width of each mica piece may be equal to or less than the width of the tape base material.

The heat resistant layer may include a corrugated mica strip.

When the tape base material is stretched, the corrugation of the corrugated mica strip may be spread out.

A plurality of the corrugated mica strips may be disposed so as to be spaced apart from each other in a width direction of the heat resistant layer.

The present invention provides a busbar having the heat resistant tape added thereto, wherein the heat resistant tape is attached in the state in which the tape base material is stretched, the heat resistant tape is attached to an outer surface of a busbar body by the adhesive layer exposed through a gap between the mica pieces, and the heat resistant tape is added in a spiral form such that at least 50% of a width of the tape is overlapped.

In addition, the present invention provides a busbar having the heat resistant tape added thereto, wherein the heat resistant tape is attached in the state in which the tape base material is stretched, the heat resistant tape is attached to an outer surface of a busbar body by the adhesive layer exposed between the mica strips, and the heat resistant tape is added in a spiral form such that at least 50% of a width of the tape is overlapped.

In addition, the present invention may provide various combinations of the above solving means.

### [Advantageous Effects]

According to the present invention, a heat resistant layer including a highly heat resistance material is provided on a flexible tape base material, whereby it is possible to secure heat resistance of an object to which a heat resistant tape according to the present invention is attached.

In addition, since the heat resistant tape according to the present invention includes the flexible tape base material, the heat resistant tape may be stably attached and fixed to a target including not only a simple shaped outer surface but also a complex shaped outer surface.

### [Description of Drawings]

FIG. 1 is a plan view of a heat resistant tape according to a first embodiment.
FIG. 2 is sectional views taken along lines A-A' and B-B' of FIG. 1.
FIG. 3 is a perspective view of a heat resistant tape according to a second embodiment.
FIG. 4 is a partial enlarged view of FIG. 3.
FIG. 5 is a sectional view taken along line C-C' of FIG. 3.
FIG. 6 is a perspective view of a busbar having the heat resistant tape according to the first embodiment added thereto.
FIG. 7 is a sectional view taken along line D-D' of FIG. 6.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

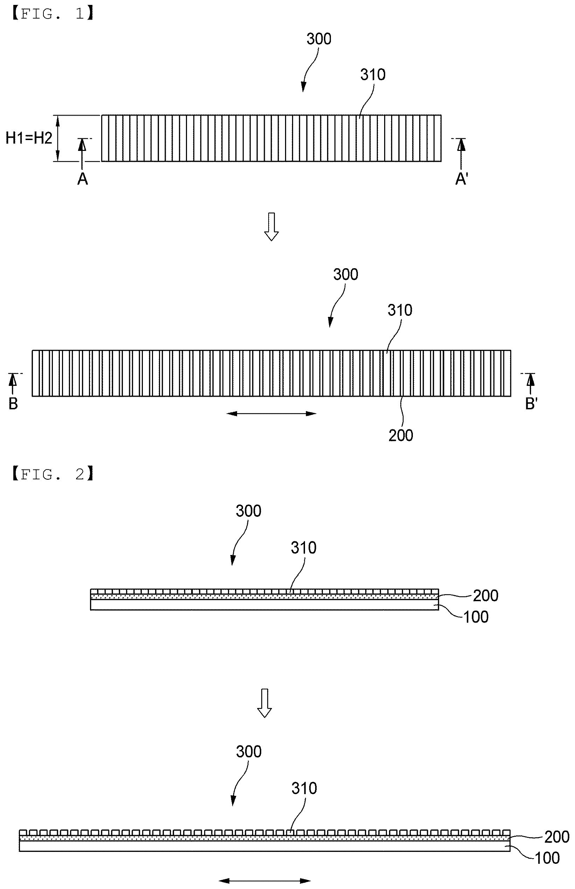

FIG. 1 is a plan view of a heat resistant tape according to a first embodiment, and FIG. 2 is sectional views taken along lines A-A' and B-B' of FIG. 1.

Referring to FIGs. 1 and 2, the heat resistant tape according to the first embodiment includes a flexible tape base material 100, an adhesive layer 200 added to an outer surface of one side of the tape base material 100, and a heat resistant layer 300 located on the surface of the adhesive layer 200.

The adhesive layer 200 is added to the entirety of one side surface of the tape base material 100, and the heat resistant layer 300 is formed on the outer surface of the adhesive layer 200 that is not opposite the tape base material 100.

The tape base material 100 may be made of a highly heat resistant material that retains its shape without melting or burning away in the presence of flames or sparks. For example, the tape base material 100 may include refractory silicone, and may further include a non-combustible material such as ceramics, minerals, and glass fibers, and a refractory agent such as mica, zeolite, and diatomaceous earth.

The refractory silicone is known to be a highly insulating material because, unlike ordinary silicone, which combusts when exposed to flames, the refractory silicone retains its shape while being ceramicized, thereby securing insulating properties.

In addition, since each of the refractory silicone and the adhesive layer is flexible, when the heat resistant tape is attached to a target, the heat resistant tape is stretched due to flexibility thereof. Therefore, even if the outer surface of the target to which the heat resistant tape is attached has a complex shape, the heat resistant tape may be stably attached to the target through the adhesive layer.

The heat resistant layer 300 may include mica. The mica is a representative heat resistant and flame-resistant material, which is one of silicate minerals having alumina silicate as the main ingredient, and has a thin plate-like structure. The mica is mainly used in the form of a sheet or a hot-pressed sheet, and because the mica is not flexible, it is limited to folding the mica unless the mica is processed into a thin sheet.

In the heat resistant tape according to the first embodiment, the heat resistant layer 300 is configured such that mica pieces 310 are continuously arranged.

In FIG. 1, the upper figure shows the state of the heat resistant tape before stretching, and the lower figure shows the state of the heat resistant tape after stretching in left and right arrow directions.

In FIG. 1, when the tape base material 100 and the adhesive layer 200 of the heat resistant tape are stretched as shown in the lower figure, the mica pieces 310 are spaced apart from each other, whereby the adhesive layer 200 is exposed between the mica pieces 310.

That is, since the heat resistant layer 300 is configured such that the plurality of mica pieces 310 is continuously arranged, the mica pieces 310 are continuously arranged without being spaced apart from each other, as shown in the upper figure of FIG. 1 and the upper figure of FIG. 2, in the state in which the heat resistant tape is not stretched. When the heat resistant tape is attached to a target, the heat resistant tape may be attached to the target while the remaining part of the heat resistant tape is pulled in the state in which an end of the heat resistant tape is attached to the target. If the heat resistant tape is deformed so as to be stretched, as described above, the heat resistant tape is tightly stretched by flexibility of each of the tape base material 100 and the adhesive layer 200, whereby the mica pieces 310 are spaced apart from each other. The adhesive layer 200 is exposed between the mica pieces spaced apart from each other, and the exposed adhesive layer 200 allows the heat resistant tape to be attached to the target.

Referring back to FIG. 1, the width H1 of the mica piece 310 is formed so as to be equal to the width H2 of the tape base material 100, and adhesion of the heat resistant tape may be secured by the adhesive layer 200 exposed between the mica pieces.

Alternatively, the width H1 of the mica piece 310 may be formed so as to be less than the width H2 of the tape base material 100, wherein the area of the surface of the adhesive layer 200 to which the mica pieces 310 are attached is decreased and the exposed area of the adhesive layer 200 is increased, whereby adhesion of the heat resistant tape may be secured even if the heat resistant tape is not attached in the state in which the heat resistant tape is stretched.

Alternatively, the mica pieces 310 may be disposed at regular intervals in the direction in which the heat resistant tape is stretched, wherein the width H1 of each of the mica pieces 310 is less than 50%, less than 30%, or less than 20% of the width H2 of the tape base material 100. In this case, the mica pieces 310 may be added in two or more rows. For example, in the state in which the heat resistant tape is stretched, the adhesive layer 200 may be exposed in a lattice structure and the mica pieces may fill the lattice.

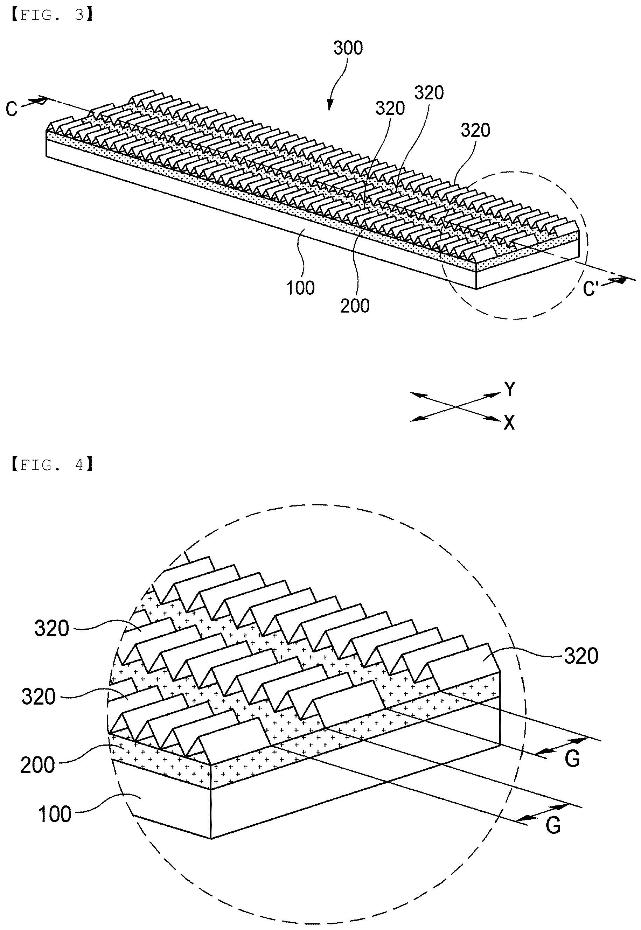

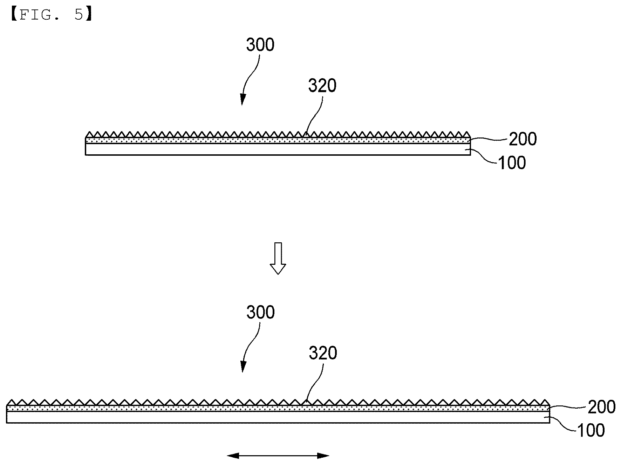

FIG. 3 is a perspective view of a heat resistant tape according to a second embodiment, FIG. 4 is a partial enlarged view of FIG. 3, and FIG. 5 is a sectional view taken along line C-C' of FIG. 3.

Referring to FIGs. 3 to 5, the heat resistant tape according to the second embodiment is identical to the heat resistant tape according to the first embodiment except that a heat resistant layer 300 includes a corrugated mica strip 320. Therefore, a description of the tape base material and the adhesive layer of the heat resistant tape according to the first embodiment is equally applicable to the heat resistant tape according to the second embodiment.

In the heat resistant tape according to the second embodiment, the heat resistant layer 300 includes a corrugated mica strip 320 arranged in a longitudinal direction (x) of the heat resistant tape, wherein at least two mica strips 320 are disposed so as to be spaced apart from each other by a certain gap G in a width direction (y) of the heat resistant layer 320.

For example, as shown in FIGs. 3 to 5, the mica strip 320 may be configured in a corrugated form that is bent in a zigzag shape, wherein the parts of the zigzag shape that protrude toward the adhesive layer 200 are coupled to the adhesive layer 200, the remaining parts are not coupled to the adhesive layer 200, and spaces are formed between the adhesive layer 200 and the mica strip 320.

In FIG. 5, the upper figure shows the state of the heat resistant tape before stretching, and the lower figure shows the state of the heat resistant tape after stretching in left and right arrow directions.

Since the mica strip 320 is not flexible, if the mica strip 320 is not corrugated, the mica strip 320 may be separated from the adhesive layer 200 as the flexible tape base material 100 and the adhesive layer 200 are stretched. However, if the mica strip 320 is corrugated, as in the present invention, the corrugation of the mica strip 320 is deformed into a spread form when the tape base material 100 and the adhesive layer 200 are stretched, whereby it is possible to prevent separation of the mica strip 320 from the adhesive layer 200.

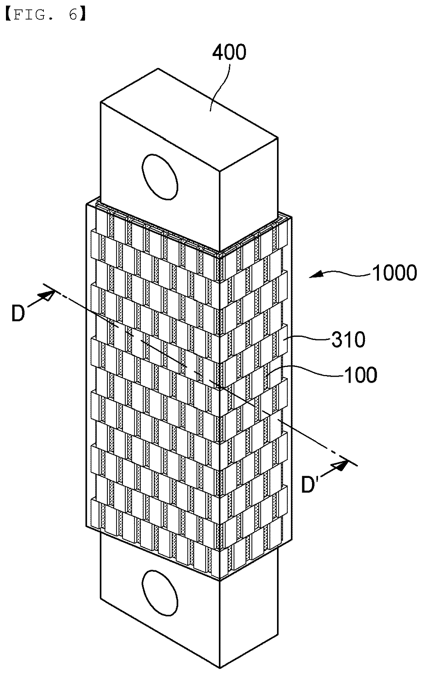

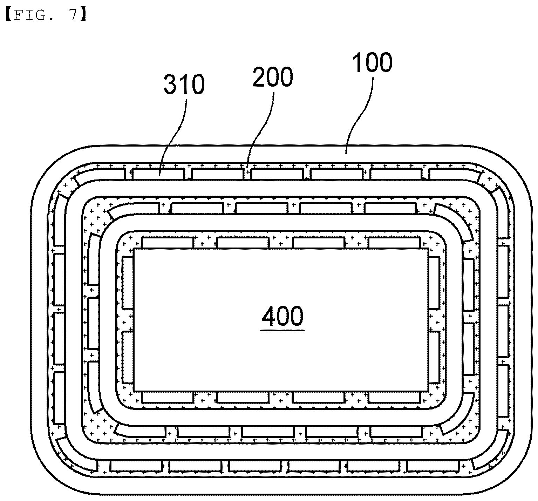

FIG. 6 is a perspective view of a busbar having the heat resistant tape according to the first embodiment added thereto, and FIG. 7 is a sectional view taken along line D-D' of FIG. 6.

Referring to FIGs. 6 and 7, the heat resistant tape 1000 according to the first embodiment is spirally wound around an outer surface of a busbar body 400. The busbar body 400 may be a metal bar made of an electrically conductive material such as copper, nickel, or aluminum, and coupling holes for electrical connection to an electronic component may be formed in both ends of the busbar body 400.

When the heat resistant tape 1000 is attached to the busbar body 400 while the heat resistant tape is pulled, the tape base material 100 and the adhesive layer 200 are attached while being stretched, whereby the mica pieces 310 are spaced apart from each other and the adhesive layer 200 is exposed therebetween. The exposed adhesive layer 200 functions as the adhesive layer of the heat resistant tape 1000. When the heat resistant tape 1000 is attached to the outer surface of the busbar body 400 while spirally wrapping around the busbar body, therefore, the heat resistant tape may be stably attached to the outer surface of the heat resistant tape attached to the inner side. At this time, the heat resistant tape 1000 may be attached in a spiral form such that at least 50% of the width thereof overlaps. Specifically, if the heat resistant tape 1000 is attached such that 50% of the width thereof overlaps, the heat resistant tape 1000 may be added to the outer surface of the busbar body 400 in a two-layer overlapping state, and if the heat resistant tape 1000 is attached such that 2/3 of the width thereof overlaps, the heat resistant tape 1000 may be added to the outer surface of the busbar body 400 in a three-layer overlapping state.

FIG. 7 shows that the heat resistant tape 1000 is added in a three-layer overlapping state, wherein the heat resistant tape 1000 may include an innermost layer, an intermediate layer, and an outermost layer. Considering the purpose of maintaining insulation of the busbar body 400 without damaging the busbar body by the mica pieces included in the heat resistant layer, it is preferable for the mica pieces 310 included in the insulating layer corresponding to the innermost layer, the intermediate layer, and the outermost layer to be disposed such that the mica pieces at least partially overlap each other in the innermost layer, the intermediate layer, and the outermost layer. That is, in at least one of the innermost layer, the intermediate layer, and the outermost layer, the mica pieces may be attached to the outer surface of the busbar body 400 to prevent exposure of or damage to the busbar body due to flames or sparks.

At this time, considering that the mica piece has no stretching properties, the mica piece may be attached to only the flat outer surface of the busbar body while the degree of stretching of the heat resistant tape is appropriately adjusted such that the mica piece is not added to corners of the busbar body.

Alternatively, if the mica piece has a thickness of about 0.2 mm, specifically 0.18 mm or less, the mica piece may be bendable, and therefore even if the mica piece is disposed at the corners of the busbar body, the mica piece may be bent and attached to the outer surface of the busbar body in tight contact therewith.

When the heat resistant tape according to the second embodiment is attached to the busbar body, the tape base material 100 and the adhesive layer 200 are attached in a stretched state as the heat resistant tape is attached while being pulled, whereby the corrugation of the mica strip 320 is deformed into a spread form. In the heat resistant tape according to the second embodiment, the adhesive layer 200 is exposed between the plurality of mica strips 320, whereby the thickness of the heat resistant layer 300 is reduced as the corrugation of the mica strip is spread out, and the heat resistant tape is attached to the outer surface of the busbar body 400 by the adhesive layer 200 exposed between the mica strips 320. At this time, the heat resistant tape may be attached to the busbar body while spirally wrapping around the busbar body such that at least 50% of the width thereof overlaps.

In order to attach the heat resistant tape to the busbar body via the adhesive layer outside the heat resistant layer with respect to the surface of the busbar body, the thickness of the heat resistant layer may be formed so as to be less than the thickness of the tightly stretched adhesive layer. Therefore, the heat resistant tape according to each of the first embodiment and the second embodiment is attached with the mica pieces 310 constituting the heat resistant layer 300 embedded in the adhesive layer 200, as shown in FIG. 7.

In the heat resistant tape according to the second embodiment, the mica strip may be continuously formed in the longitudinal direction of the heat resistant tape, wherein the mica strip may have a thickness of about 0.2 mm, specifically 0.18 mm or less, so as to be bent at the corners of the busbar body, whereby the heat resistant tape may be attached to the outer surface of the busbar body in tight contact therewith.

Those skilled in the art to which the present invention pertains will appreciate that various applications and modifications are possible within the category of the present invention based on the above description.

### (Description of Reference Symbols)

100: Tape base material
200: Adhesive layer
300: Heat resistant layer
310: Mica piece
320: Mica strip
400: Busbar body
1000: Heat resistant tape
G: Gap
H1: Width of mica piece
H2: Width of tape base material

## Claims

1. A heat resistant tape comprising:
a flexible tape base material;
an adhesive layer added to an outer surface of one side of the tape base material; and
a heat resistant layer located on a surface of the adhesive layer.

2. The heat resistant tape according to claim 1, wherein the tape base material comprises refractory silicone.

3. The heat resistant tape according to claim 1, wherein the heat resistant layer comprises mica.

4. The heat resistant tape according to claim 3, wherein the heat resistant layer includes mica pieces continuously arranged.

5. The heat resistant tape according to claim 4, wherein, when the tape base material is stretched, the mica pieces are configured to be spaced apart from each other and the adhesive layer is exposed between the mica pieces.

6. The heat resistant tape according to claim 4, wherein a width of each mica piece is equal to or less than a width of the tape base material.

7. The heat resistant tape according to claim 3, wherein the heat resistant layer comprises a corrugated mica strip.

8. The heat resistant tape according to claim 7, wherein, when the tape base material is stretched, the corrugation of the corrugated mica strip is spread out.

9. The heat resistant tape according to claim 7, wherein a plurality of the corrugated mica strips is disposed so as to be spaced apart from each other in a width direction of the heat resistant layer.

10. A busbar having the heat resistant tape according to any one of claims 1 to 6 added thereto, wherein
the heat resistant tape is attached in a state in which the tape base material is stretched,
the heat resistant tape is attached to an outer surface of a busbar body by the adhesive layer exposed through a gap between the mica pieces, and
the heat resistant tape is added in a spiral form such that at least 50% of a width of the tape is overlapped.

11. A busbar having the heat resistant tape according to any one of claims 7 to 9 added thereto, wherein
the heat resistant tape is attached in a state in which the tape base material is stretched,
the heat resistant tape is attached to an outer surface of a busbar body by the adhesive layer exposed between the mica strips, and
the heat resistant tape is added in a spiral form such that at least 50% of a width of the tape is overlapped.
